(19)

Europäisches
Patentamt
European
Patent Office
Office européen
des brevets

(11) **EP 1 993 091 A2**

(12) **EUROPEAN PATENT APPLICATION**

(43) Date of publication:
**19.11.2008 Bulletin 2008/47**

(51) Int Cl.:
***G11B 7/0065*** *(2006.01)*

(21) Application number: **08002251.0**

(22) Date of filing: **07.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.02.2007 JP 2007029453**

(71) Applicant: **Sharp Kabushiki Kaisha**
**Osaka-shi, Osaka 545-8522 (JP)**

(72) Inventors:
• **Tanaka, Masaki**
  **Tenri-shi, Nara 632-0004 (JP)**
• **Okada, Kuniaki**
  **Tenri-shi, Nara 632-0033 (JP)**

(74) Representative: **Müller - Hoffmann & Partner**
**Patentanwälte**
**Innere Wiener Strasse 17**
**81667 München (DE)**

(54) **Information recording apparatus and information reproduction apparatus utilizing light**

(57) An information recording apparatus (100, 101, 200, 201, 300, 301) recording information on a recording medium (11) by causing interference of a signal light beam and a reference light beam in said recording medium (11) includes a movable optical deflector (9, 16, 19) deflecting said reference light beam in a direction different from said signal light beam, and a lens (10) collecting said signal light beam and said deflected reference light beam into said recording medium (11) to form interference fringes.

FIG.1

EP 1 993 091 A2

**Description**

This nonprovisional application is based on Japanese Patent Application No. 2007-029453 filed with the Japan Patent Office on February 8, 2007, the entire contents of which are hereby incorporated by reference.

BACKGROUND OF THE INVENTION

Field of the Invention

The present invention relates to an information recording apparatus and an information reproduction apparatus and, more specifically, to an information recording apparatus recording data in the form of interference fringes of signal and reference light beams in a multiplexed manner on a hologram recording medium, as well as to an information reproduction apparatus reproducing the data recorded in multiplexed manner on the hologram recording medium.

Description of the Background Art

To attain higher recording capacity of an optical memory, hologram recording for recording and reproduction utilizing holography has been proposed. Generally, hologram recording, in which information is recorded on a recording medium using holography, is carried out in the following manner. Specifically, a light beam emitted from a light source is split into a reference light beam and a signal light beam, and the signal light beam is amplitude-modulated by a spatial light modulator so that it comes to have image information. Then, the amplitude-modulated signal light beam and reference light beam are collected by a collecting lens and superimposed as Fourier transformed images inside a hologram recording medium. Interference fringes generated when the signal and reference light beams are superimposed are written in volumetric manner, in the hologram recording medium.

Various methods have been known for hologram multiplexing recording, including, for example, shift-multiplexing recording, angle-multiplexing recording and peristrophic multiplexing. To attain higher recording capacity of hologram recording, it is important to realize hologram recording by appropriately combining these methods of multiplexing recording.

A conventional hologram recording/reproduction apparatus combines angle-multiplexing method and peristrophic multiplexing method (see, for example, Japanese Patent Laying-Open No. 2000-338846).

Here, angle-multiplexing recording refers to a method of realizing multiplexing recording by varying incident angles of reference light beams to the recording medium and thereby recording a plurality of holograms. Peristrophic multiplexing recording refers to a method of realizing multiplexing recording in which a reference light beam is rotated in a conical surface with the recording medium being at the vertex, whereby a plurality of holograms are recorded with the reference light beam having different rotation angles.

In the conventional hologram recording/reproduction apparatus, in order to realize angle-multiplexing recording and peristrophic multiplexing recording, optical elements such as a diffraction grating, a prism and a mirror are used to deflect the reference light beam, so that the incident angle and rotation angle of the reference light beam to the recording medium are varied, realizing multiplexing recording.

It is noted that the hologram recording medium has a dynamic range of recording sensitivity. In the conventional hologram recording/reproduction apparatus, the region where the reference and signal light beams are superimposed, that is, the position where the interference fringes corresponding to the information to be recorded are recorded, is always the same. Therefore, in the conventional hologram recording/reproduction apparatus, holograms are always recorded on the same position and, therefore, at the position of recording, the dynamic range of recording sensitivity of the hologram recording medium is locally consumed.

SUMMARY OF THE INVENTION

An object of the present invention is to provide an information recording apparatus and an information reproduction apparatus that allow effective use of the dynamic range of recording sensitivity of a hologram recording medium.

According to an aspect, the present invention provides an information recording apparatus recording information on a recording medium by causing interference of a signal light beam and a reference light beam in the recording medium, including: a movable optical deflector deflecting the reference light beam in a direction different from the signal light beam; and a lens collecting the signal light beam and the deflected reference light beam into the recording medium to form interference fringes.

Preferably, the optical deflector is movable in the optical axis direction of the signal light beam or the reference light beam.

Preferably, the optical deflector includes a prism deflecting the reference light beam in a direction different from the signal light beam.

Preferably, the optical deflector includes a diffraction grating portion deflecting the reference light beam in a direction different from the signal light beam.

Preferably, the diffraction grating portion is formed as a blazed grating.

Preferably, the optical deflector includes a lens deflecting the reference light beam in a direction different from the signal light beam.

Preferably, the optical deflector is formed integrally.

According to another aspect, the present invention provides an information reproducing apparatus reproducing information recorded on a recording medium by causing interference of a signal light beam and a reference light beam in the recording medium, including: a movable optical deflector deflecting the reference light beam in a direction different from the signal light beam; and a lens collecting the deflected reference light beam in an approximately the same direction as at the time of recording, to reproduce information recorded in the recording medium.

Preferably, the optical deflector is movable in the optical axis direction of the signal light beam or the reference light beam.

Preferably, the optical deflector includes a prism deflecting the reference light beam in a direction different from the signal light beam.

Preferably, the optical deflector includes a diffraction grating portion deflecting the reference light beam in a direction different from the signal light beam.

More preferably, the diffraction grating portion is formed as a blazed grating.

Preferably, the optical deflector includes a lens deflecting the reference light beam in a direction different from the signal light beam.

Preferably, the optical deflector is formed integrally.

The present invention enables effective use of the dynamic range of recording sensitivity of the hologram recording medium.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a side view showing a schematic structure of an information recording/reproducing apparatus 100 in accordance with a first embodiment of the present invention.

Fig. 2 shows an arrangement of signal and reference light beams in information recording/reproduction apparatus 100 in accordance with the first embodiment of the present invention.

Fig. 3A is a top view showing a structure of an optical deflector 9 in information recording/reproduction apparatus 100 in accordance with the first embodiment of the present invention. Fig. 3B is a cross-sectional view showing a cross-section taken along the line III-III of Fig. 3A of optical deflector 9. Fig. 3C is a cross-sectional view showing a modification of optical deflector 9.

Fig. 4 is a cross-sectional view showing a principle of recording of information recording/reproduction apparatus 100 in accordance with the first embodiment of the present invention.

Fig. 5 is a side view showing a schematic structure of a modification of information recording/reproduction apparatus 100 in accordance with the first embodiment of the present invention.

Fig. 6 is a side view showing a schematic structure of an information recording/reproduction apparatus 200 in accordance with a second embodiment of the present invention.

Fig. 7A is a top view showing a structure of an optical deflector 16 in information recording/reproduction apparatus 200 in accordance with the second embodiment of the present invention. Fig. 7B is a cross-sectional view showing a cross-section taken along the line VII-VII of Fig. 7A of optical deflector 16.

Fig. 8A is a top view showing a structure of a modification of optical deflector 16 in information recording/reproduction apparatus 200 in accordance with the second embodiment of the present invention. Fig. 8B is a cross-sectional view showing a cross-section taken along the line VIII-VIII of Fig. 8A of the modification of optical deflector 16.

Fig. 9 is a side view showing a schematic structure of a modification of information recording/reproduction apparatus 200 in accordance with the second embodiment of the present invention.

Fig. 10 is a side view showing a schematic structure of an information recording/reproduction apparatus 300 in accordance with a third embodiment of the present invention.

Fig. 11 is a schematic illustration showing an arrangement of signal and reference light beams in information recording/reproduction apparatus 300 in accordance with the third embodiment of the present invention.

Fig. 12A is a top view showing a structure of optical deflector 19 in information recording/reproduction apparatus 300 in accordance with the third embodiment of the present invention. Fig. 12B is a cross-sectional view showing a cross-section taken along the line XII-XII of Fig. 12A of optical deflector 19.

Fig. 13 is a side view showing a schematic structure of a modification of information recording/reproduction apparatus 300 in accordance with the third embodiment of the present invention.

DESCRIPTION OF THE PREFERRED EMBODIMENTS

In the following, embodiments of the present invention will be described with reference to the figures. In the figures, the same or corresponding portions will be denoted by the same reference characters and description thereof will not be repeated.

<First Embodiment>

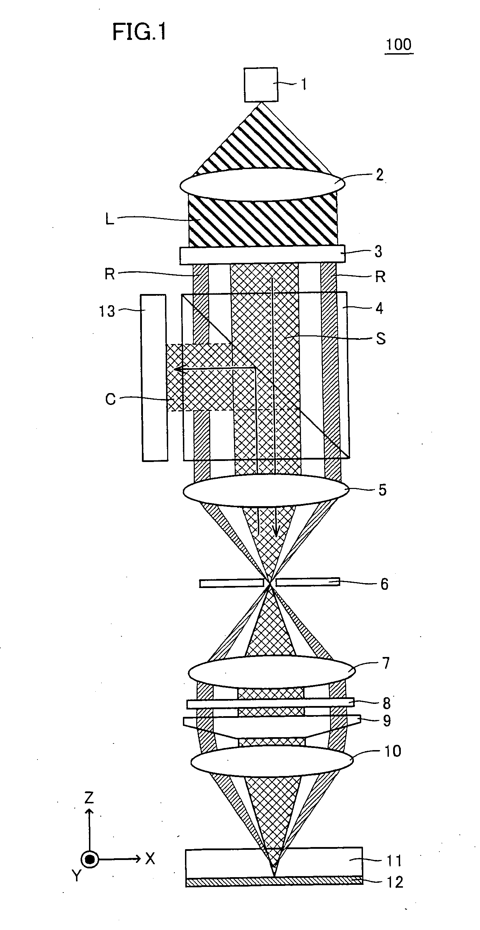

Fig. 1 is a side view showing a schematic structure of an information recording/reproducing apparatus 100 in accordance with a first embodiment of the present invention.

Referring to Fig. 1, information recording/reproduction apparatus 100 includes a laser 1, a collimate lens 2, a spatial modulator 3, a polarizing beam splitter 4, relay lenses 5 and 7, a spatial filter 6, a quarter (1/4) wave plate 8, an optical deflector 9, an objective lens 10, and an image pick-up device 13. Information recording/reproduction apparatus 100 records information on a hologram recording medium 11, and reproduces information from hologram recording medium 11. Hologram recording medium 11 has a reflection film 12.

[Recording]

First, a recording operation of information recording/reproduction apparatus 100 will be described.

A laser beam L emitted from laser 1 is converted to parallel light beams by collimate lens 2, which beams enter spatial modulator 3. Receiving the collimated laser beams L, spatial modulator 3 generates signal light beam S and reference light beam R.

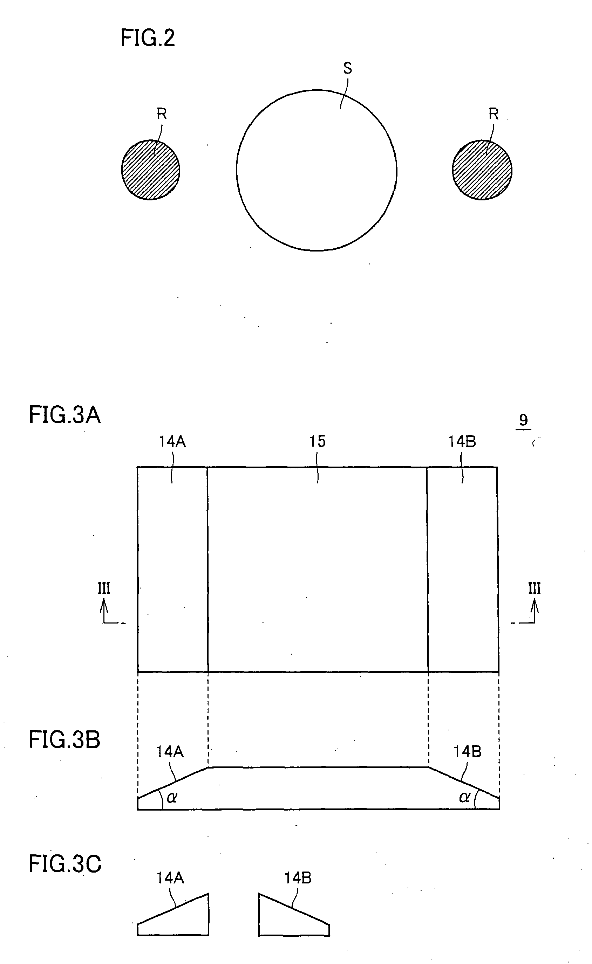

Fig 2 shows an arrangement of signal and reference light beams in information recording/reproduction apparatus 100 in accordance with the first embodiment of the present invention.

Referring to Fig. 2, by way of example, spatial light modulator 3 generates signal light beam S at a central portion with the optical axis being the center, and generates reference light beam R consisting of two luminous fluxes positioned apart by 180° on opposite sides of signal light beam S. The number of luminous fluxes forming reference light beam R is not limited to two. The reference light beam R may consist of one luminous flux or three or more luminous fluxes. Further, reference light beam R may have an orbicular shape.

Again referring to Fig. 1, signal light beam S and reference light beam R pass through polarizing beam splitter 4, and collected by relay lens 5.

Spatial filter 6 is inserted to a light collecting surface side of relay lens 5. Of the collected signal light beam S and reference light beam R, spatial filter 6 passes 0-th order diffraction beam and shuts-off diffraction beams of higher order generated by spatial light modulation by spatial light modulator 3.

Relay lens 7 returns signal light beam S and reference light beam R that have passed through spatial filter 6 again to parallel light beams.

Quarter wave plate 8 converts signal light beam S and reference light beam R received from relay lens 7 to circularly polarized light.

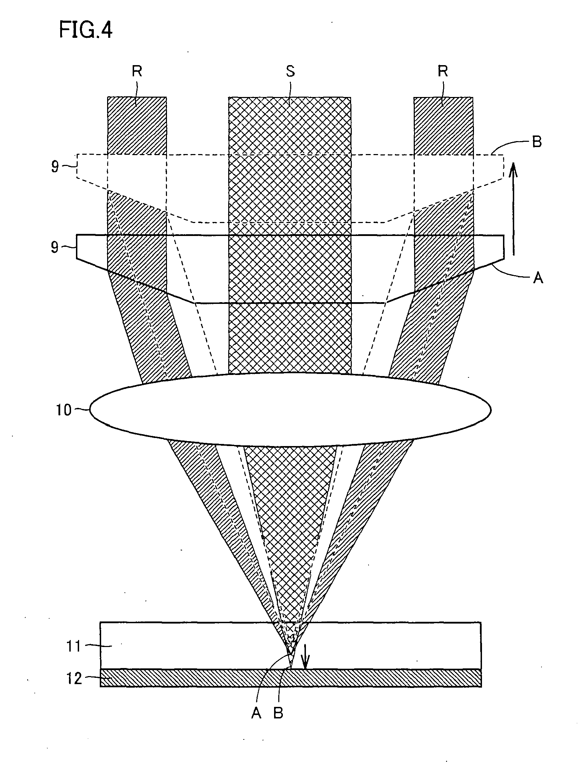

Optical deflector 9 is arranged at a position near an irradiation surface of spatial light modulator 3 or near a surface optically conjugate to the irradiation surface of spatial light modulator 3, where the signal light beam S and reference light beam R are separate from each other. Optical deflector 9 deflects (refracts) optical path of reference light beam R received from quarter wave plate 8. Further, optical deflector 9 is movable. By way of example, position of optical deflector 9 may be changed by a driving mechanism, not shown. Function of the optical deflector and function attained by the positional change of optical deflector will be described in detail later, with reference to Figs. 3 and 4.

Objective lens 10 collects signal light beam S and reference light beam R received from optical deflector 9 in hologram recording medium 11, to form interference fringes. Specifically, signal light beam S and reference light beam R emitted from objective lens 10 interfere inside the hologram recording medium 11 arranged near the focal point of objective lens 10, forming interference fringes. On a surface of hologram recording medium 11 opposite to the incident surface of signal light beam S and reference light beam R, a reflection film 12 is formed.

Fig. 3A is a top view showing a structure of an optical deflector 9 in information recording/reproduction apparatus 100 in accordance with the first embodiment of the present invention. Fig. 3B is a cross-sectional view showing a cross-section taken along the line III-III of Fig. 3A of optical deflector 9. Fig. 3C is a cross-sectional view showing a modification of optical deflector 9.

Referring to Figs. 3A and 3B, optical deflector 9 includes prisms 14A and 14B, and a flat surface 15. By way of example, prisms 14A and 14B have the same vertex angle of $\alpha$, and arranged opposite to each other with an area transmitting signal light beam S positioned inbetween. Flat surface 15 is formed at the central portion of optical deflector 9 through which signal light beam S passes.

Signal light beam S passes through the flat surface 15 at the central portion of optical deflector 9 and, therefore, the optical path of signal light beam S is not deflected. On the other hand, reference light beam R passes through the surfaces where prisms 14A and 14B are formed and, therefore, optical path of reference light beam R is deflected in accordance with the vertex angle of prisms 14A and 14B. The direction of deflection of reference light beam R is not limited to the one shown in Fig. 1 and it may be different from the direction shown in Fig. 1.

Here, optical deflector 9 is formed integrally. Because of such a structure, only one driving member for changing the position of optical deflector 9' is necessary in information recording/reproduction apparatus 100 and, hence, simpler structure and lower cost of information recording/reproduction apparatus can be realized.

In the information recording/reproduction apparatus in accordance with the first embodiment of the present invention, flat surface 15 is assumed to be at the central portion of optical deflector 9. Such a structure is not limiting. What is necessary is that optical deflector 9 does not deflect the optical axis of signal light beam S and, therefore, a structure having a through opening at the central portion is also possible.

Referring to Fig. 3C, optical deflector 9 may not be formed as an integral body. Specifically, optical deflector 9 may include separate prisms, of which number corresponds to the number of luminous fluxes of reference light beam R. Further, optical deflector 9 may be a combination of a diffraction grating and a lens that will be described in the second and third embodiments of the present invention.

Next, focus-shifted multiplexing recording performed by information recording/reproduction apparatus 100 will be described.

Fig. 4 is a cross-sectional view showing a principle of recording of information recording/reproduction apparatus 100 in accordance with the first embodiment of the present invention.

Referring to Fig. 4, optical deflector 9 is arranged such that the surface of optical deflector 9 having prisms 14A and 14B formed thereon faces the side of hologram recording medium 11, and then, reference light beam R is vertically incident on optical deflector 9.

Here, optical deflector 9 is movable in at least one of optical axis direction of signal light beam S and optical axis direction of reference light beam R, so that deflected reference light beam R will be collected at different positions in the thickness direction of hologram recording medium 11.

More specifically, when optical deflector 9 is moved from a position A to a position B in the optical axis direction of signal light beam S or reference light beam R, incident position of reference light beam R to objective lens 10 changes, and hence, incident angle of reference light beam R to hologram recording medium 11 changes. By such a structure, the region where the reference light beam R and the signal light beam S are superimposed is shifted in the thickness direction of hologram recording medium 11, enabling multiplexing recording of hologram.

By way of example, assume that objective lens 10 has numerical aperture of 0.45 and focal length of 10mm, prisms 14A and 14B have refractive index of 1.5 and vertex angle of 0.5°. Here, if the position of optical deflector 9 is shifted by 2mm in the optical axis direction of signal light beam S or reference light beam R, the position of hologram generated in hologram recording medium 11 will be shifted by about 20$\mu$m in the thickness direction of hologram recording medium 11.

[Reproduction]

Next, a reproducing operation of information recording/reproduction apparatus 100 will be described.

At the time of reproduction, spatial light modulator 3 receives laser beam L and generates only the reference light beam R. As in the recording operation, reference light beam R passes through polarizing beam splitter 4 and collected by relay lens 5.

Of the collected reference light beam R, spatial filter 6 passes 0-th order diffraction beam and shuts-off diffraction beams of higher order generated by spatial light modulation by spatial light modulator 3.

Relay lens 7 returns reference light beam R that has passed through spatial filter 6 again to parallel light beams. Quarter wave plate 8 converts reference light beam R received from relay lens 7 to circularly polarized light.

Objective lens 10 collects the reference light beam R received from optical deflector 9 in approximately the same direction as at the time of recording, to reproduce information recorded in hologram recording medium 11. Specifically, objective lens 10 collects the reference light beam R received from optical deflector 9 to irradiate the interference fringes formed on hologram recording medium 11.

From the interference fringes irradiated with reference light beam R, a reproduction light beam C is generated. As describe above, when information recording/reproduction apparatus 100 carries out focus-shifted multiplexed recording on hologram recording medium 11, it is possible to obtain reproduction light beams C from holograms corresponding to positions A and B of recording in the thickness direction of hologram recording medium 11 by shifting the position of optical deflector 9 to positions A and B of recording.

Reproduction light beam C is reflected by reflecting film 12, passes through objective lens 10 and optical deflector 9, and converted to linearly polarized light by quarter wave plate 8. The linearly polarized reproduction light beam C is reflected by polarizing beam splitter 4, and enters image pick-up device 13.

Image pick-up device 13 detects intensity distribution pattern of reproduction light beam C received from polarizing beam splitter 4, and generates a hologram reproduction signal.

In the conventional hologram recording/reproduction apparatus, holograms are always recorded on the same position and, therefore, dynamic range of recording sensitivity of the hologram recording medium is locally consumed at the recording position. In the information recording/reproducing apparatus in accordance with the first embodiment of the present invention, it is possible to change the incident angles of signal light beam S and reference light beam R to hologram recording medium 11, by shifting optical deflector 9 including prisms 14A and 14B in the optical axis direction of signal light beam S or reference light beam R, at the time of recording. Specifically, by focus-shifted multiplexing recording, it becomes possible to form a plurality of holograms in the thickness direction of hologram recording medium 11. Therefore, it is possible to increase the degree of multiplexing of holograms recorded in hologram recording medium 11, and to effectively utilize the thickness of hologram recording medium. By way of example, if a thick hologram recording medium is used, sensitivity in the thickness direction of hologram recording medium can effectively be utilized.

Further, in the information recording/reproduction apparatus in accordance with the first embodiment of the present invention, at the time of reproduction, by shifting optical deflector 9 including prisms 14A and 14B in the optical axis direction of signal light beam S or reference light beam R, the incident angle of reference light beam R to hologram recording medium can be changed. Specifically, it is possible to reproduce a plurality of holograms formed in the thickness direction of the hologram recording medium.

Therefore, in the information recording/reproduction apparatus in accordance with the first embodiment of the present invention, dynamic range of recording sensitivity of the hologram recording medium can effectively be utilized. Further, in the information recording/reproduction apparatus in accordance with the first embodiment of the present invention, by a simple structure of shifting optical deflector 9 in at least one of optical axis direction of signal light beam S and optical axis direction of reference light beam R, an information recording apparatus capable of focus-shifted multiplexing recording and an information reproduction apparatus capable of reading holograms recorded in multiplexed manner in the thickness direction can be realized.

Further, in the information recording/reproduction apparatus in accordance with the first embodiment of the present invention, the portion of optical deflector 9 where reference light beam R passes is implemented by prisms 14A and 14B. Here, a prism can be fabricated with high accuracy by molding and cutting, with fabrication error of vertex angle being 0.01° or smaller. Therefore, according to the first embodiment of the present invention, a highly accurate information reading/reproduction apparatus can be realized using an inexpensive deflecting means.

The information recording/reproduction apparatus in accordance with the first embodiment of the present invention has been described as having a structure in which optical deflector 9 is shifted in at least one of optical axis direction of signal light beam S and optical axis direction of reference light beam R at the time of recording and reproduction. The structure, however, is not limiting. A structure in which optical deflector 9 is shifted in a direction different from the optical axis direction of signal light beam S or optical axis direction of reference light beam R may be used, as long as multiplexing recording to hologram recording medium is possible by changing the focal position of the reference light beam.

[Modification]

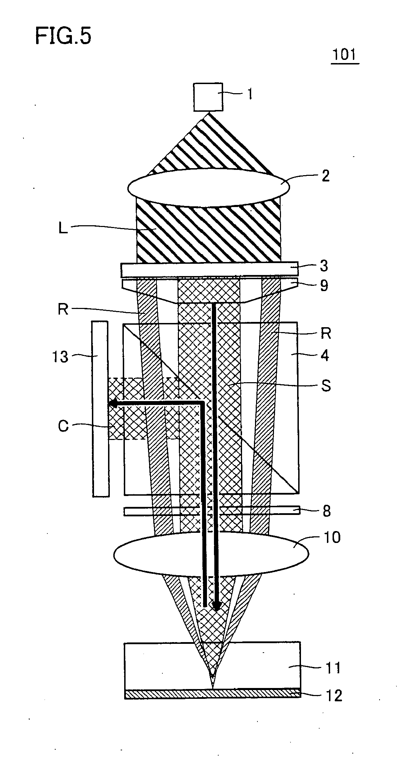

Fig. 5 is a side view showing a schematic structure of a modification of information recording/reproduction apparatus 100 in accordance with the first embodiment of the present invention.

Referring to Fig. 5, an information recording/reproduction apparatus 101 includes a laser 1, a collimate lens 2, a spatial light modulator 3, a polarizing beam splitter 4, a quarter wave plate 8, an optical deflector 9, an objective lens 10, and an image pick-up device 13.

As compared with information recording/reproduction apparatus 100, the structure lacks relay lenses 5 and 7 and spatial filter 6. Even such a structure can attain the object of the present invention of effectively utilizing the dynamic range of recording sensitivity of hologram recording medium.

Next, another embodiment of the present invention will be described with reference to the figures. In the figures, the same or corresponding portions will be denoted by the same reference characters and description thereof will not be repeated.

<Second Embodiment>

The present embodiment is directed to an information recording/reproduction apparatus in which the structure of optical deflector is made different from that of information recording/reproduction apparatus in accordance with the first embodiment.

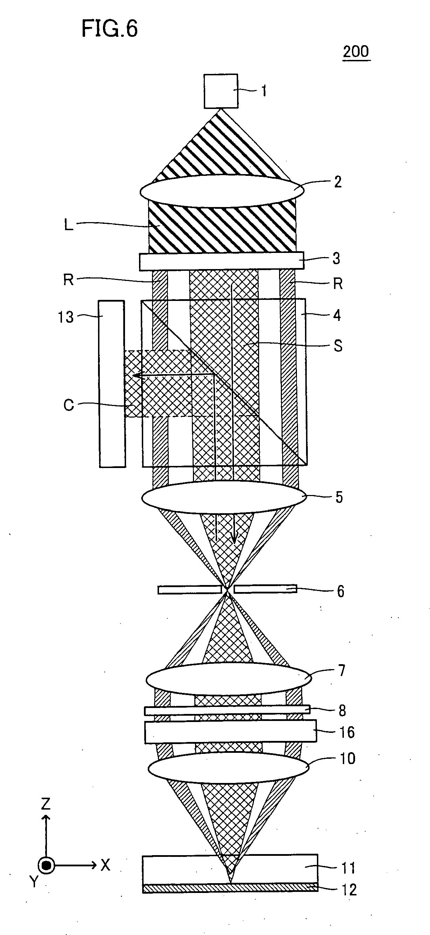

Fig. 6 is a side view showing a schematic structure of an information recording/reproduction apparatus 200 in accordance with a second embodiment of the present invention.

Referring to Fig. 6, different from information recording/reproduction apparatus 100 in accordance with the first embodiment of the present invention, information recording/reproduction apparatus 200 includes, in place of optical deflector 9, an optical deflector 16.

As in information recording/reproduction apparatus 100 in accordance with the first embodiment of the present invention, in information recording/reproduction apparatus 200, spatial light modulator 3 generates signal light beam S at the central portion and generates reference light beam R consisting of two luminous fluxes positioned apart by 180° on opposite sides of signal light beam S, with the optical axis being the center, as shown, for example, in Fig. 2.

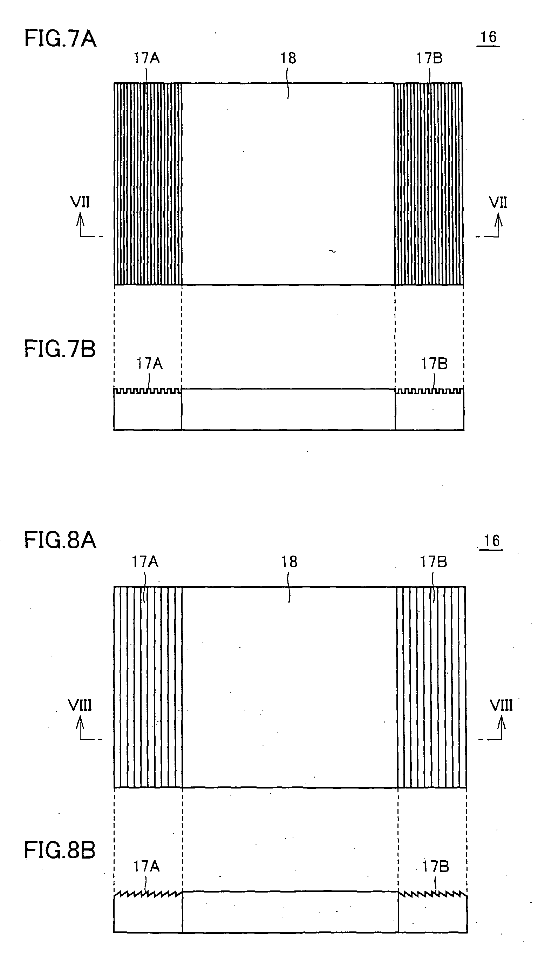

Fig. 7A is a top view showing a structure of an optical deflector 16 in information recording/reproduction apparatus 200 in accordance with the second embodiment of the present invention. Fig. 7B is a cross-sectional view showing a cross-section taken along the line VII-VII of Fig. 7A of optical deflector 16.

Referring to Fig. 7, optical deflector 16 includes diffraction grating portions 17A and 17B, and a flat surface 18. Flat surface 18 is formed at the central portion of optical deflector 16 through which signal light beam S passes. Diffraction grating portions 17A and 17B include a plurality of diffraction gratings of equal grating period, and arranged opposite to each other with the central portion of optical deflector 16 positioned inbetween. Optical deflector 16 may not be formed integrally as show in Fig. 7. Specifically, optical deflector 16 may have a structure including separate diffraction gratings, of which number corresponds to the number of luminous fluxes of reference light beam R.

Signal light beam S passes through flat surface 18 at the central portion of optical deflector 16 and, therefore, the optical path of signal light beam S is not deflected. On the other hand, reference light beam R passes through surfaces where diffraction grating portions 17A and 17B are formed, and therefore, the optical path of reference light beam R is deflected in accordance with the grating period.

Here, incident angle $\theta i$ to the normal of diffraction grating, the exit angle $\theta o$ to the normal of diffraction grating and the grating period A of the diffraction grating satisfy the following relation:

$$\Lambda(\sin\theta i - \sin\theta o) = m \times \lambda \ (m = \pm 1, 2, 3, \ldots, \lambda: \text{wavelength})$$

Therefore, assuming that the incident angle $\theta i$ and wavelength $\lambda$ are constant, the exit angle $\theta o$ changes in accordance with the grating period A. The exit angle $\theta o$ of a few degrees is sufficient and, therefore, the grating period A would be about a few hundreds/mm.

Fig. 8A is a top view showing a structure of a modification of optical deflector 16 in information recording/ reproduction apparatus 200 in accordance with the second embodiment of the present invention. Fig. 8B is a cross-sectional view showing a cross-section taken along the line VIII-VIII of Fig. 8A of the modification of optical deflector 16.

Referring to Fig. 8, the diffraction gratings at diffraction grating portions 17A and 17B may be blazed gratings. Such a structure improves light use efficiency.

Optical deflector 16 deflects optical path of reference light beam R received from quarter wave plate 8. Optical deflector 16 is movable.

Objective lens collects signal light beam S and reference light beam R received from optical deflector 16 in hologram recording medium 11, to form interference fringes. Specifically, interference fringes are recorded at a region where reference light beam R and signal light beam S are superimposed, in hologram recording medium 11.

By shifting optical deflector 16 in the direction of optical axis of signal light beam S or reference light beam R, the reference light beam R comes to be collected at different positions in the thickness direction of hologram recording medium 11 and, therefore, a plurality of holograms are formed along the thickness direction of hologram recording medium 11.

Other operations and structures are the same as those of the information recording/reproduction apparatus in accordance with the first embodiment and, therefore, detailed description thereof will not be repeated.

Therefore, as in the information recording/reproduction apparatus in accordance with the first embodiment, in the information recording/reproduction apparatus in accordance with the second embodiment, dynamic range of recording sensitivity of the hologram recording medium can effectively be utilized. Further, in the information recording/reproduction apparatus in accordance with the second embodiment of the present invention, by a simple structure of shifting optical deflector 16 in at least one of optical axis direction of signal light beam S and optical axis direction of reference light beam R, an information recording apparatus capable of focus-shifted multiplexing recording and an information reproduction apparatus capable of reading holograms recorded in multiplexed manner in the thickness direction can be realized.

Further, in the information recording/reproduction apparatus in accordance with the second embodiment, the portion of optical deflector 9 where reference light beam R passes is implemented by diffraction grating portions 17A and 17B including a plurality of diffraction gratings. Here, the diffraction grating may have the pitch of about a few hundreds/mm, as described above. Therefore, the second embodiment of the present invention realizes a highly accurate information reading/reproduction apparatus that can be fabricated in a simple manner.

[Modification]

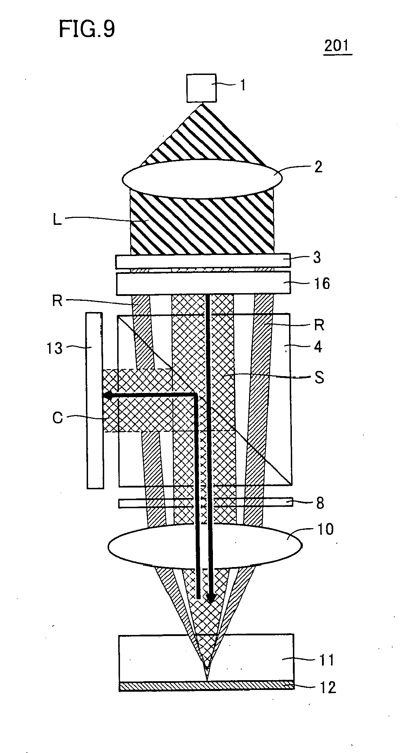

Fig. 9 is a side view showing a schematic structure of a modification of information recording/reproduction apparatus in accordance with the second embodiment of the present invention.

Referring to Fig. 9, an information recording/reproduction apparatus 201 includes a laser 1, a collimate lens 2, a spatial light modulator 3, a polarizing beam splitter 4, a quarter wave plate 8, an optical deflector 16, an objective lens 10 and an image pick-up device 13.

As compared with information recording/reproduction apparatus 200, the structure lacks relay lenses 5 and 7 and spatial filter 6. Even such a structure can attain the object of the present invention of effectively utilizing the dynamic range of recording sensitivity of hologram recording medium.

Next, a still another embodiment of the present invention will be described with reference to the figures. In the figures, the same or corresponding portions will be denoted by the same reference characters and description thereof will not be repeated.

<Third Embodiment>

The present embodiment is directed to an information recording/reproduction apparatus in which the structure of optical deflector is made different from that of information recording/reproduction apparatus in accordance with the first embodiment.

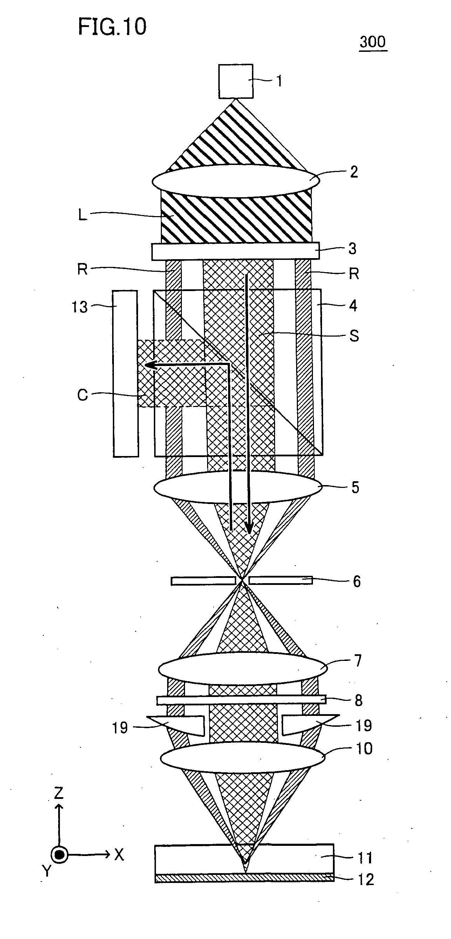

Fig. 10 is a side view showing a schematic structure of an information recording/reproduction apparatus 300 in accordance with a third embodiment of the present invention.

Referring to Fig. 10, different from information recording/reproduction apparatus 100 in accordance with the first embodiment of the present invention, information recording/reproduction apparatus 300 includes, in place of optical deflector 9, an optical deflector 19.

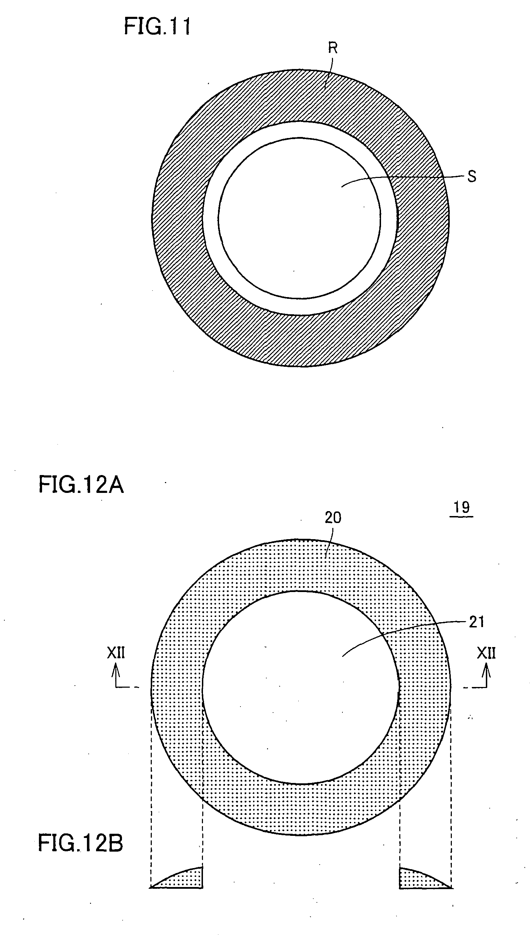

Fig. 11 is a schematic illustration showing an arrangement of signal and reference light beams in information recording/reproduction apparatus 300 in accordance with the third embodiment of the present invention.

Referring to Fig. 11, spatial light modulator 3 generates signal light beam S at the central portion and generates reference light beam R in a ring-shape at an outer circumferential portion, with the optical axis being the center.

Fig. 12A is a top view showing a structure of optical deflector 19 in information recording/reproduction apparatus 300 in accordance with the third embodiment of the present invention. Fig. 12B is a cross-sectional view showing a cross-section taken along the line XII-XII of Fig. 12A of optical deflector 19.

Referring to Fig. 12, optical deflector 19 includes a lens 20 through which the reference light beam passes, and an opening 21 through which the signal light beam passes. Optical deflector 19 may not be formed integrally as shown in Fig. 12. Specifically, optical deflector 19 may include separate lenses, of which number corresponds to the number of luminous fluxes of reference light beam R.

Lens 20 may be a convex lens or a concave lens. Further, the signal light beam transmitting portion is not limited to an opening, and it may be a flat surface.

Signal light beam S passes through opening 21 of optical deflector 19 and, therefore, the optical path of signal light beam S is not deflected. On the other hand, reference light beam R passes through lens 20 and, therefore, the optical path of reference light beam R is deflected and converged to be incident on objective lens 10.

Optical deflector 19 deflects the optical path of reference light beam R received from quarter wave plate 8. Optical deflector 19 is movable.

Objective lens 10 collects signal light beam S and reference light beam R received from optical deflector 19 in hologram recording medium 11, to form interference fringes. Specifically, interference fringes are recorded at a region where reference light beam R and signal light beam S are superimposed, in hologram recording medium 11.

By shifting optical deflector 19 in the direction of optical axis of signal light beam S or reference light beam R, the reference light beam R comes to be collected at different positions in the thickness direction of hologram recording medium 11 and, therefore, a plurality of holograms are formed along the thickness direction of hologram recording medium 11.

Other operations and structures are the same as those of the information recording/reproduction apparatus in accordance with the first embodiment and, therefore, detailed description thereof will not be repeated.

Therefore, as in the information recording/reproduction apparatus in accordance with the first embodiment, in the information recording/reproduction apparatus in accordance with the third embodiment, dynamic range of recording sensitivity of the hologram recording medium can effectively be utilized. Further, in the information recording/reproduction apparatus in accordance with the second embodiment of the present invention, by a simple structure of shifting optical deflector 19 in at least one of optical axis direction of signal light beam S and optical axis direction of reference light beam R, an information recording apparatus capable of focus-shifted multiplexing recording and an information reproduction apparatus capable of reading holograms recorded in multiplexed manner in the thickness direction can be realized.

[Modification]

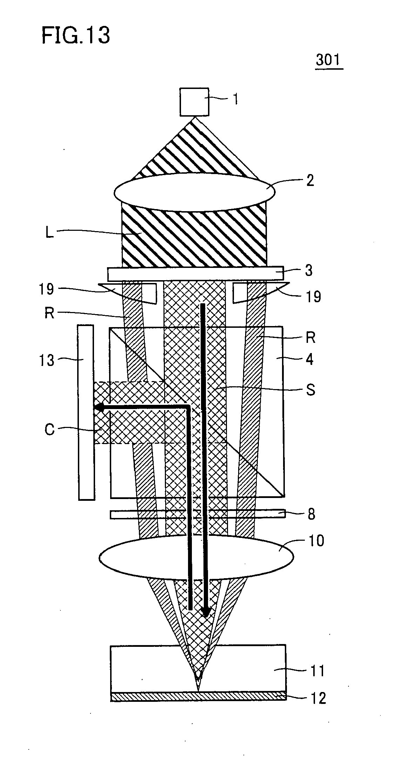

Fig. 13 is a side view showing a schematic structure of a modification of information recording/reproduction apparatus 300 in accordance with the third embodiment of the present invention.

Referring to Fig. 13, an information recording/reproduction apparatus 301 includes a laser 1, a collimate lens 2, a spatial light modulator 3, a polarizing beam splitter 4, a quarter wave plate 8, an optical deflector 19, an objective lens 10 and an image pick-up device 13.

As compared with information recording/reproduction apparatus 300, the structure lacks relay lenses 5 and 7 and spatial filter 6. Even such a structure can attain the object of the present invention of effectively utilizing the dynamic range of recording sensitivity of hologram recording medium.

Although the present invention has been described and illustrated in detail, it is clearly understood that the same is by way of illustration and example only and is not to be taken by way of limitation, the scope of the present invention being interpreted by the terms of the appended claims.

## Claims

1. An information recording apparatus (100, 101, 200, 201, 300, 301) recording information on a recording medium (11) by causing interference of a signal light beam and a reference light beam in said recording medium (11), comprising:

   a movable optical deflector (9, 16, 19) deflecting said reference light beam in a direction different from said signal light beam; and
   a lens (10) collecting said signal light beam and said deflected reference light beam into said recording medium (11) to form interference fringes.

2. The information recording apparatus according to claim 1, wherein
   said optical deflector (9, 16, 19) is movable in at least one of an optical axis direction of said signal light beam and an optical axis direction of said reference light beam.

3. The information recording apparatus according to claim 1, wherein
   said optical deflector (9) includes a prism (14A, 14B) deflecting said reference light beam in a direction different from said signal light beam.

4. The information recording apparatus according to claim 1, wherein
   said optical deflector (16) includes a diffraction grating portion (17A, 17B) deflecting said reference light beam in a direction different from said signal light beam.

5. The information recording apparatus according to claim 4, wherein
   said diffraction grating portion (17A, 17B) is formed as a blazed grating.

6. The information recording apparatus according to claim 1, wherein
   said optical deflector (19) includes a lens (20) deflecting said reference light beam in a direction different from said signal light beam.

7. The information recording apparatus according to claim 1, wherein
   said optical deflector (9, 16) is formed integrally.

8. An information reproduction apparatus (100, 101, 200, 201, 300, 301) reproducing information recorded on a recording medium (11) by causing interference of a signal light beam and a reference light beam in said recording medium (11), comprising:

a movable optical deflector (9, 16, 19) deflecting said reference light beam in a direction different from said signal light beam; and

a lens (10) collecting said deflected reference light beam in an approximately the same direction as at the time of recording, to reproduce information recorded in said recording medium (11).

9. The information reproduction apparatus according to claim 8, wherein said optical deflector (9, 16, 19) is movable in at least one of an optical axis direction of said signal light beam and an optical axis direction of said reference light beam.

10. The information reproduction apparatus according to claim 8, wherein said optical deflector (9) includes a prism (14A, 14B) deflecting said reference light beam in a direction different from said signal light beam.

11. The information reproduction apparatus according to claim 8, wherein said optical deflector (16) includes a diffraction grating portion (17A, 17B) deflecting said reference light beam in a direction different from said signal light beam.

12. The information reproduction apparatus according to claim 11, wherein said diffraction grating portion (17A, 17B) is formed as a blazed grating.

13. The information reproduction apparatus according to claim 8, wherein said optical deflector (19) includes a lens (20) deflecting said reference light beam in a direction different from said signal light beam.

14. The information reproduction apparatus according to claim 8, wherein said optical deflector (9, 16) is formed integrally.

FIG.1

100

FIG.2

FIG.3A    <u>9</u>

14A    15    14B

III      III

FIG.3B

14A    14B

$\alpha$      $\alpha$

FIG.3C

14A    14B

FIG.4

FIG.5

FIG.6

200

FIG.7A

17A        18        17B     16

VII                               VII

FIG.7B

17A                  17B

FIG.8A

17A        18        17B     16

VIII                              VIII

FIG.8B

17A                  17B

FIG.9

FIG.10

<u>300</u>

## FIG.11

## FIG.12A

## FIG.12B

# FIG.13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007029453 A
- JP 2000338846 A